Europäisches Patentamt

European Patent Office

Office européen des brevets

(11) Publication number: **0 382 517 B1**

# EUROPEAN PATENT SPECIFICATION

(45) Date of publication of patent specification: **10.08.94**  (51) Int. Cl.⁵: **B25J 9/18**

(21) Application number: **90301320.9**

(22) Date of filing: **07.02.90**

(54) **Controlling the operation of a robot arm.**

(30) Priority: **10.02.89 JP 29713/89**

(43) Date of publication of application:
**16.08.90 Bulletin 90/33**

(45) Publication of the grant of the patent:
**10.08.94 Bulletin 94/32**

(84) Designated Contracting States:
**DE FR GB**

(56) References cited:

**1987 IEEE International Conference on Robotics & Automation, March 31-April 3, 1987, Raleigh, North Carolina, US vol. 2, 1987, New York, US pages 741- 750; Kazerooni H.: "Robust, Non-Linear Impedance Control for RobotManipulators"**

**IEEE JOURNAL OF ROBOTICS AND AUTOMATION. vol. RA-3, no. 1, February 1987, NEWYORK US &Babcock: "Inverse Dynamics Position Control of a Compliant Manipulator"**

(73) Proprietor: **International Business Machines Corporation
Old Orchard Road
Armonk, N.Y. 10504 (US)**

(72) Inventor: **Ishikawa, Hiroshi
25-2 Takaishigami
Ichikawa-shi, Chiba-ken (JP)**
Inventor: **Kawase, Kei
1-11-14 Iwatominami
Komae-shi, Tokyo-to (JP)**

(74) Representative: **Atchley, Martin John Waldegrave
IBM United Kingdom Limited
Intellectual Property Department
Hursley Park
Winchester Hampshire SO21 2JN (GB)**

IEEE JOURNAL OF ROBOTICS AND AUTOMA-
TION. vol. RA-3, no. 5, October 1987,
NEWYORK US pages 386 - 392; Tsuneo
Yoshikawa: "Dynamic Hybrid Posi-
tion/ForceControl of Robot Manipulators: De-
scription of Hand Constraints and Cal-
culationof Joint Driving Force"

1987 IEEE International Conference on
Robotics & Automation, March 31-April 3,
1987, Raleigh, North Carolina, US vol. 2, 1987,
New York, US& J.M. Hollerbach: "Dynamic-
Stability Issues in Force Control of Manipu-
lator"

1985 IEEE International Conference on
Robotics & Automation, March 25-28,1985 ,
St Louis , Missouri , US vol. 1, 1985, New
York, US pages 262 - 268; D.E. Whitney: "His-
torical Perspective and State of the Art in
Robot ForceControl"

## Description

The present invention relates to a method and apparatus for the control of the operation of a robot manipulator having an arm with several joints and degrees of movement and on the end of which is mounted a hand. The manipulator includes a wrist joint positioned between the arm and the hand. Such a manipulator can be used to enable the hand to perform various types of work.

In many cases the work that can be performed using the manipulator hand is restricted by the external environment in which the manipulator is operated. The assembly of work pieces, the rotation of cranks and grinding operations are examples of such work. In order to perform these types of work using manipulator controlled by a position control system, a high-precision manipulator position determining apparatus and an accurate teaching technique are necessary. However, the high-precision determining apparatus greatly increases the cost of the manipulator control system and it is difficult to obtain sufficient precision using present techniques. The exact work performance teaching also requires much time.

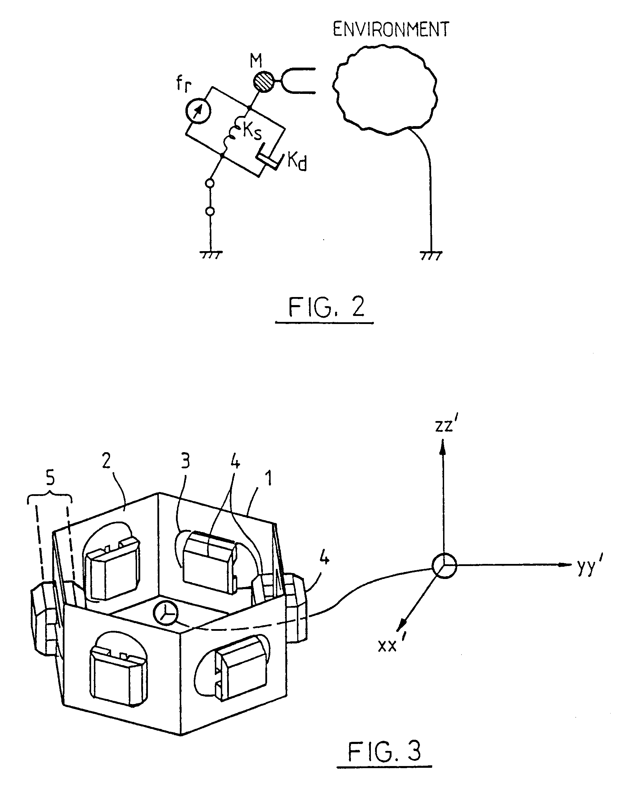

On the other hand, it has been proposed that the manipulator be provided with the flexibility for adapting its operation to the restrictions imposed by the environment by controlling the force interacting with the restrictive environment. Here, the control for the flexible operation of the manipulator adapting to such environmental restricted is called "compliance control" and the operation realised thereby is called "compliance operation". In other words, the compliance control is to control the manipulator as if there were a suspension mechanism comprising a spring (Ks), a damper (Kd), a mass (M) and a source of force (fr) associated with the manipulator as shown in Figure 2 of the accompanying drawings.

As disclosed in a paper entitled "Historical Perspective and State of the Art in Robotic Force Control", by D. E. Whitney, Proceedings of IEEE International Conference on Robotics and Automation, pp. 262 - 268, 1985, and other documents, most of the conventionally reported compliance control methods are ones which feed back information about the force being exerted in the external environment using a force sensor, or are ones in which the arm being controlled includes an actuator or manipulator capable of easy torque control such as a DD motor (Direct Drive motor).

Although an arm including a DD motor can easily control the compliance operation, the manipulator itself is apt to be large relative to the moving weight due to the problem of the power weight ratio of the DD motor included. Furthermore, it becomes a problem from the viewpoint of control that the response frequency is decreased remarkably with the increase of compliance controls to be performed due to the inertial effect of the large manipulator weight.

The use of a manipulator which is provided with a decelerator and is represented by an industrial manipulator brings about a larger power weight ratio, making it possible to lighten the manipulator itself. However, since the influence of the friction force exerted by the decelerator becomes appreciably large, it becomes difficult to control the force exerted by each joint of the manipulator with high accuracy.

A method of obtaining the compliance control by mounting a force sensor on a manipulator which is provided with a decelerator is disclosed in a paper entitled "Implementing Compliance Control with a High Speed Operator" by Hiroshi Ishikawa, et al., Japanese Precision Engineering Institute, Proceedings of the Spring Meeting, 1988, pp. 675 - 676. The contents of this paper are also disclosed in the specification of Japanese Patent Application 63-59574. According to this method, the position and the velocity which the hand of the manipulator is to have at a given moment are calculated from the information about the force exerted by the manipulator and the hand obtained by the force sensor and the servo control of the position and velocity is executed for each joint of the manipulator. Nevertheless, according to this method, the influences of the external environment in which the manipulator is operating is included in the feedback loop. Therefore, the control system stability is influenced by the external environment. Especially, when the external environment is very hard, the apparent feedback gain becomes large and the control gain of the manipulator needs to be reduced. However, the reduction of the control gain causes a larger influence from the frictional force exerted by the decelerator which appreciably reduces the accuracy of the force exerted by the manipulator and the hand. Therefore, the realisable extent of the contact of the compliance operation is restricted by the decelerator friction force and the hardness of the external environment.

Further, a method was disclosed in a paper entitled "A Six Degree-of-Freedom Magnetically Levitated Variable Compliance Fine Motion Wrist" presented by R. L. Hollis, et al. at 4th International Symposium on Robotics Research, Santa Cruz, Ca., August 9 - 14, 1987. This method involves the use of a manipulator wrist joint capable of high-precision compliance control of the manipulator. After the wrist joint has moved the manipulator to the place where the work is to be performed by the manipulator and the manipulator is fixed in position, the compliance operation is performed by the action of the wrist joint. However, there still exists according to this method a problem that the manipulator is not able to move through a wide range of positions during the compliance operation since the manipulator is fixed during the compliance control in this method. The same problem applies to a manipulator disclosed in EPA 283547.

For complex work using the manipulator, such as the assembly work, the ability of performing different types of compliance operation with the manipulator and changing the type of operation freely is required.

The object of the present invention is to provide an improved method of performing a stable compliance operation with a manipulator, particularly for moving the manipulator at a high speed towards a hard object and then touching it very softly with the manipulator hand.

The present invention relates to a method of controlling a robot manipulator comprising an arm, a wrist joint and a hand, said wrist joint being operable to move the hand relative to tile arm and capable of generating an arbitrary force at said hand, whereby the hand is to be moved to an intended position, comprising the steps of: detecting at least the values of the position and the velocity of movement of said hand, computing a force to be generated by said hand, and utilising said wrist joint to generate said force, and characterised by the steps of: detecting the value of the current position of the arm; solving the equation of movement of said hand and arm on the basis of the detected values, in order to compute the force to be generated by said hand, determining the displacement ($^w p_f$) of the hand from a zero ($^w p_o$) position relative to the arm and calculating a reference position ($^w p_{wr}$) of said arm using the equation of motion for the manipulator by subjecting said hand displacement to a filter function of either $k_p + K_i/S$ or $K_p/(1 + K_i/S)$, where $K_p$ is a proportion gain, $K_i$ is an integration gain and S is a Laplace operator; and controlling said arm so as to make the present position of the arm coincident with this arm reference position ($^w p_{wr}$) and controlling said hand so that the position of said hand coincides with the intended position of the hand, to thereby compensate for limitation in the range of movement of said wrist joint.

The invention also relates to a robot manipulator comprising an arm, a wrist joint and a hand, said wrist joint being operable to move the hand relative to the arm and capable of generating an arbitrary force at said hand, whereby the hand is to be moved to an intended position, said manipulator further comprising: means for detecting at least the values of the position and the velocity of movement of said hand, computing a force to be generated by said hand, arid utilising said wrist joint to generate said force, and characterised by: means for detecting the value of the current position of the arm; means for solving the equation of movement of said hand and arm on the basis of the detected values, in order to compute the force to be generated by said hand, means for determining the displacement ($^w p_f$) of the hand from a zero ($^w p_o$) position relative to the arm and calculating a reference position ($^w p_{wr}$) of said arm using the equation of motion for the manipulator by subjecting said hand displacement to a filter function of either $k_p + K_i/S$ or $K_p/(1 + K_i/S)$, where $K_p$ is a proportion gain, $K_i$ is an integration gain and S is a Laplace operator; and means for controlling said arm position so as to make the present position of the arm coincident with this arm reference position ($^w p_{wr}$) and controlling said hand so that the position of said hand coincides with the intended position of the hand, to thereby compensate for limitations in the range of movement of said wrist joint.

By using a method and apparatus according to the present invention it becomes possible to arrange for the manipulator hand to touch a very hard object to be worked, making it possible to perform assembly operations and fitting operations using hard parts made of metal and the like. Such an assembly of hard parts has been in great demand at factory sites. Conventionally, such work may be carried out only by a manipulator including an expensive DD arm (see above).

Further, by using a method or apparatus according to the present invention it becomes possible to perform with a manipulator a high speed compliance operation which is impossible with a manipulator including a DD arm. The high speed compliance operation has also been in great demand at factory sites.

According to one embodiment of the invention, in order to perform a small inertia compliance operation which is not influenced by the external environment, the manipulator is provided with a wrist joint capable of performing a compliance operation. As described above, normally this type of structure has the problem that a large range of motion cannot be obtained during the compliance operation. The arrangement according to the present invention enlarges the range of motion of the wrist joint by moving the wrist joint to a position where the wrist joint can be effectively operated at all times by the manipulator.

A wrist joint driven by one or more actuators each of which include a voice coil motor or a periplanar coil motor is employed. By using actuators of which type, a relatively linear force-current characteristic may be obtained. In such an arrangement the force from the external environment does not come into the feedback loop, and stable compliance control of the manipulator may be carried out without any influence from the external environment. Furthermore, relatively high speed motion of the manipulator becomes possible because of the small inertia of the wrist joint. In order to cope with the small range of motion of each actuator, the manipulator moves the wrist joint to the position where each wrist joint actuator can operate effectively at all times.

In order that the invention may be more readily understood, an embodiment of the invention will now be described with reference to the accompanying drawings, in which:

Figure 1 is a block diagram illustrating the control method according to the present invention,

Figure 2 is a drawing for explaining the manipulator compliance operation to be performed by the present invention,

Figure 3 is a perspective view of a wrist joint used in a manipulator according to the present invention,

Figure 4 is a perspective view of an actuator used in the wrist joint illustrated in Figure 3,

Figure 5 is a drawing for explaining coordinates defining the movement of the wrist joint,

Figure 6 is a drawing for explaining the relationship between the coordinates defining the movement of the whole arm of which the wrist joint forms a part and the coordinates defining the movement of the wrist joint,

Figure 7 is a drawing for explaining manipulator hand displacement,

Figure 8 is a block diagram of a one-dimensional model of the control method of the invention used for analysis, and

Figure 9 is a block diagram in which the external environment (including an object which the manipulator hand touches) is extremely hard in the one-dimensional model of Figure 8.

In the following description, after the description of the wrist joint structure which provides six degrees of freedom of movement of the manipulator, the control algorithm, in the case where the manipulator and wrist joint have six degrees of freedom, will be described.

A suitable example of the six degrees of freedom wrist joint is disclosed in the above paper by R. L. Hollis et al. and its contents are also described in the specification of European Patent Application No. 88109051.8 (EP-A- 294760). The following description is a part of the contents of the above patent application.

Figure 3 illustrates part of a wrist joint for a manipulator. The wrist joint features a single moving part, a dynamically magnetically levitated movable element 1. A hollow rigid shell-like moving body 2 contains six planar or quasi-planar curved magnetic coils 3. The element 1 is the levitated structure of the wrist joint and bears the same relationship to the fixed structure (stator) of the wrist joint as does the more commonly known rotor in a magnetic bearing. The element 1 is hereinafter called "flotor."

Note that the relative positions of flotor and stator as moving and fixed elements, respectively, may be exchanged, but for clarity the coil-bearing element will be designated the flotor in this description.

The flotor 1 structure carries the tool chuck or gripper (not shown) to be used in performing work operations by the manipulator. The tool chuck or gripper, or equivalent, whether with or without a tool, may be called the "end effector," the "gripper," or simply the "hand." In this description, the end of the hand with the gripper is called the "hand," or the end of the wrist joint itself without the gripper is called the "hand."

Figure 3 shows a flotor element 1 which is in the conformation of a prism of hexagonal cross-section. The flotor coils 3 form part of actuators for moving a manipulator, each flotor coil 3 interacting with a respective magnet assembly 4 within the respective actuator 5 to produce movement of the flotor element 1. In the preferred embodiment, a flexible ribbon cable provides electrical connections to the coils 3 without restricting the movement of the flotor element 1. The axes of adjacent actuators 5 are oriented at right angles to each other around the hexagonal flotor element 1.

Each flotor coil 3 operates within a large magnetic gap in its associated fixed stator structure which contains permanent magnets. Suitable control means for the flotor coils 3 currents is provided to produce a flotor element 1 capable of moving with high translational and rotational accelerations over distances and angles limited by the magnetic gaps. The actuators 5 are arranged in such a manner as to provide for the flotor element three orthogonal translational degrees of freedom (X, Y, Z) and three orthogonal rotational degrees of freedom (X rotation, Y rotation, Z rotation) which are developed by coil currents specified by a control unit, not shown in Figure 3.

As shown in Figure 3, the six actuators 5 are not arranged identically, but rather the axis of each actuator is rotated 90° relative to the axes of the adjacent actuators. In the preferred embodiment, the axes of the actuators are alternately horizontally and vertically. The axes may be parallel to the flotor element 1 top surface as shown in Figure 3, or may be at +45°, -45°, or otherwise to the top surface to accomplish the same purpose. The hollow moving shell flotor element 1 is suspended by actively controlled magnetic levitation by means of the currents in the units 3 in such a manner that the movement of the manipulator, to which the flotor is attached, can be varied over a wide range of magnitudes and directions under program control.

Each actuator 5 has a periplanar flotor coil 3, either planar to match the associated plane face of a flotor element 1 with hexagonal periphery, or curved to match a different flotor element 1 configuration with

5

curved periphery. To provide six degrees of freedom, a number (at least six) of flat-wound periplanar (flat or curved) flotor coils 3, operating in magnetic fields produced by permanent magnet assemblies in the actuators 5, are required to produce actuation forces and torques in three dimensions. The periplanar coils 3 are rigidly incorporated in the lightweight hollow shell flotor element 1 which forms the moving part of the wrist joint. Alternatively, for some applications, the magnets 4 and associated structures can be made to move, with the flotor element 1 coil structure being fixed, an arrangement which has some advantages for cooling.

The basic electromechanical unit which provides a source of force or (in pairs) torque to the wrist joint is a periplanar (flat or curved) coil electrodynamic drive unit, or actuator.

The preferred embodiment provides six actuators 5 and a ring-like shell flotor element 1. This closed configuration makes it convenient for mounting the wrist joint on a robot arm and, in turn, for mounting a manipulator including tooling or other end effectors to the wrist joint.

Figure 3 shows six actuators 5, with their axes arranged alternately vertically and horizontally about a ring flotor element 1 with a hexagonal cross-section. The inner ring of magnets and the magnetic flux return plates are rigidly connected with a ring-shaped mechanical support (not shown) and similarly for the outer ring of magnets and magnetic flux return plates. These inner and outer rings of magnets form a fixed stator structure having a closed dual periphery. The circumference surface of the flotor element 1 is attached to the manipulator. A hexagonal top plate (not shown) serves as an end effector mounting platform.

In Figure 3, the wrist joint is shown in its zero position, floating in the magnetic gaps in the actuators. In this configuration the flotor element XYZ coordinate axes and the stator X'Y'Z' coordinate axes are coincident. For a wrist joint approximately 200 mm in diameter, translations and rotations of the flotor element of the order of ±4mm and ±5° are easily achieved.

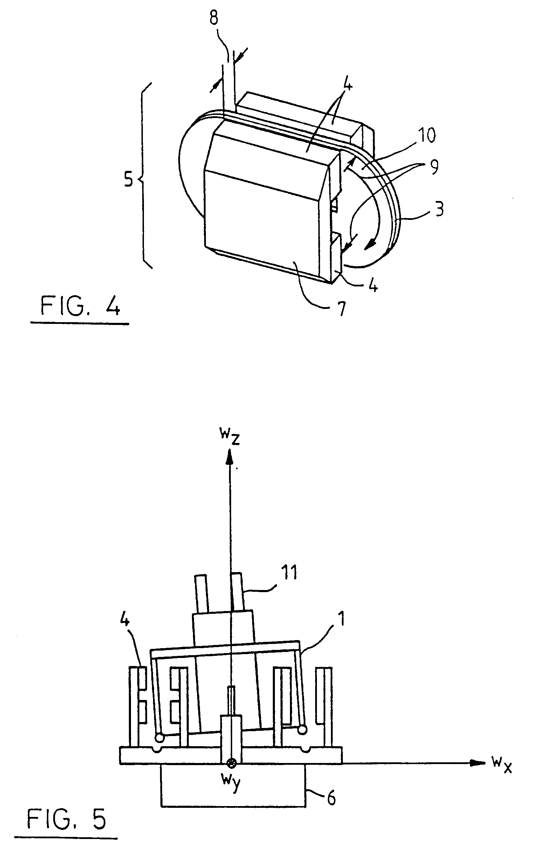

Figure 4 shows a typical actuator 5. Four permanent magnets 4 with two permeable magnetic flux return plates 7 provide high magnetic fields (arrows 9) in the large gap 8 between the magnets 4. Current flowing in the periplanar coil 3 produces a force mutually orthogonal to the field and current directions.

A pair of permeable return plates 7 serve to return the magnetic flux. Typical gap flux densities B for the preferred embodiment are about 7 kG. A current i in flotor coil 3 interacts with the magnetic field to produce a force $F = BiL$, where L is the effective length of wire in the gap 8. Flat coils such as those used in the actuator elements similar to those described here are commonly used as actuators in magnetic disk files for data processing apparatus. In such disk files, an attempt is made to minimise the gap size to maximise the effective magnetic field and to reduce stray fields. In the embodiment being described, the gap 8 is necessarily much larger than the thickness of flotor coil 3 to allow motion of the flotor element 1 in all six degrees of freedom.

Passive damping is provided in the actuator 5 design by adding sheets 10 of electrically conducting material, e.g. copper, as facings for the coils 3. As the conducting sheets move in the gap 8, eddy currents are generated. These have values which are proportional to the velocity of movement of the flotor element and generate damping (cushioning) forces which oppose the motion of the flotor element 1 and also have values which are proportional to the velocity of movement of the flotor element. The passive damping tends to reduce the magnitude of structural vibration modes and simplifies the control algorithm.

Figure 5 is a side elevation of the wrist joint, showing the flotor element 1 with the periplanar coils in juxtaposition with the actuator magnets 4. Flotor element 1 is levitated; that is, it is suspended in space by virtue of the magnetic forces in the actuator 5. The flotor element 1 carries end effector 11 forming part of the manipulator.

The coordinates $w_x$, $w_y$ and $w_z$ which will be described below are the coordinates of movement of the hand at the top end of the manipulator as shown in Figure 5 relative to the end 6 of the arm. Hereinafter, these coordinates are called "wrist coordinates". As is clear from the foregoing explanation, the wrist joint provides six degrees of freedom of translation and rotation for the respective axis of $w_x$, $w_y$ and $w_z$.

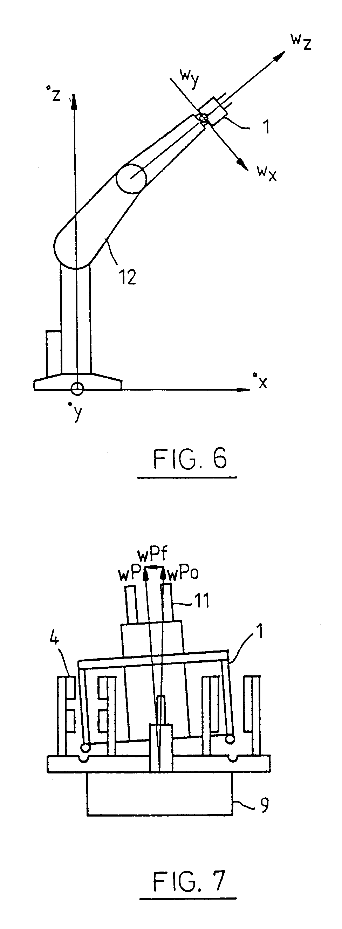

The manipulator and the arm 12 also have six degrees of freedom of translation and rotation along the respective axis of another set of coordinates $^o x$, $^o y$ and $^o z$, as shown in Figure 6, relative to the support for the arm. Hereinafter, these coordinates are called "world coordinates".

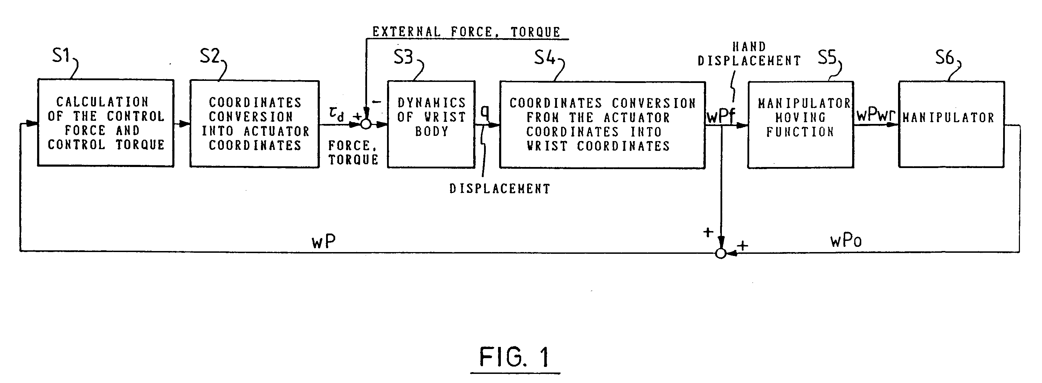

The various steps of the compliance control method according to the present invention will now be described with reference to Figure 1.

Step S1:

If the hand has the compliance based upon the second order system as shown in Figure 2, the equation of movement of the hand is expressed by Equation (1),

$$^{O}M(^{O}\ddot{P}_r - ^{O}\ddot{P}) + ^{O}K_d(^{O}\dot{P}_r - ^{O}\dot{P}) + ^{O}K_s(^{O}P_r - ^{O}P) + ^{O}f_r - ^{O}f = 0 \qquad (1)$$

$^{O}P_r$ :     reference value (6 vectors) of the hand position in world coordinates

$^{O}P$ :     hand position (6 vectors) in world coordinates

$^{O}f_r$ :     reference value (6 vectors) of the force given to the hand in world coordinates

$^{O}f$ :     force (6 vectors) given to the hand in world coordinates

$^{O}M$ :     imaginary mass•inertia (6 x 6 matrix) in world coordinates

$^{O}K_d$ :     imaginary attenuation coefficients (6 x 6 matrix) in world coordinates

$^{O}K_s$ :     imaginary spring coefficient (6 x 6 matrix) in world coordinates

$^{O}M$, $^{O}K_d$ and $^{O}K_r$ are arbitrarily specified.

Therefore, the force to be produced by the wrist body is expressed in the wrist coordinates:

$$^{W}f_d = ^{W}M(^{W}\ddot{P}_r - ^{W}\ddot{P}) + ^{W}K_d(^{W}\dot{P}_r - ^{W}\dot{P}) + ^{W}K_s(^{W}P_r - ^{W}P) + ^{W}f_r \qquad (2)$$

$^{W}P_r$ :     reference values (6 vectors) of the hand position in wrist coordinates

$^{W}P$ :     hand positions (6 vectors) in wrist coordinates

$^{W}f_r$ :     reference values (6 vectors) of the force given to the hand in wrist coordinates

$^{W}f_d$ :     desired force (6 vectors) given to the hand in wrist coordinates

$^{W}M$ :     imaginary mass•inertia (6 x 6 matrix) in wrist coordinates

$^{W}K_d$ :     imaginary attenuation coefficient (6 x 6 matrix) in wrist coordinates

$^{W}K_s$ :     imaginary spring coefficient (6 x 6 matrix) in wrist coordinates

$^{W}P$ is fed back in the manner described below.

$^{W}\dot{P}$ and $^{W}\ddot{P}$ are determined by differentiating $^{W}P$ with time.

The determination up to $^{W}P$ attains the high-accuracy control. However, it is to be noted that the term of the acceleration is not necessarily required. It is allowed that in Equation (2) the term of the acceleration is neglected, that is $^{W}M$ is set at zero.

Step S2:

Each actuator of the wrist joint may be moved in one dimension. Then, the actuator position can be expressed by one-dimensional coordinates. The six dimensional coordinates expressing these six actuator positions are called "actuator coordinates."

The desired force $\tau_d$ to be produced by each actuator can be expressed as follows, using Jacobian matrix $J_f$ which converts the wrist coordinates as to the wrist joint into the actuator coordinates:

$$\tau_d = J_f^T \cdot {}^{W}f_d \qquad (3)$$

$\tau_d$:     desired force to be produced by each actuator of the wrist joint

$J_f$:     Jacobian matrix of the wrist joint (the superscript T represents a transposition)

If it is assumed that force-current characteristic of each actuator of the wrist joint is linear, the current should be controlled so as to set the force of each actuator at $\tau_d$.

Step S3:

The hand is displaced according to the force $\tau_d$ produced by each actuator of the wrist joint and the force (external force) applied to the hand from an external source. One example, is the case where the hand touches an extremely hard object. In this case, although the wrist joint, that is the hand, produces a force by the current flowing through the actuators, the hand displacement becomes almost zero. It is to be noted that, since the hand position has a constant positional relationship with the movable wrist joint the actuator displacement is obtained as the quantity corresponding to the hand displacement in this step.

Step S4:

Considering the manipulator, the hand displacement $^wP_f$ in wrist coordinates is expressed as follows, using the displacement q of each actuator of the wrist joint in actuator coordinates and Kinematics function Kin( ) of the wrist joint:

$$^wP_f = Kin\ (q) \qquad (4)$$

$^wP_f$ : hand displacement (six vectors) in wrist joint coordinates

Kin( ): displacement conversion function from actuator coordinates into wrist coordinates

q : displacement (six vectors) of the actuator of the wrist joint

$$^wP_f = {}^wP - {}^wP_o \qquad (5)$$

This relationship is shown in Figure 7.

$^wP_o$ : hand position (neutral position) before $^wf_d$ and the external force are given

$^wP$ : present hand position (state where $^wf_d$ and the external force are given)

$^wP_f$: hand displacement by $^wf_d$ and the external force

Now, the explanation will be made by setting the standard point $^wP_w$ of the wrist joint position in wrist coordinates at the same position as $^wP_o$.

This relationship is illustrated in Figure 7 in which item 9 is equivalent to the end 6 illustrated in Figure 5.

$$^wP_w = {}^wP_o \qquad (6)$$

$^wP_w$ : wrist joint standard position (six vectors) in wrist coordinates

In this case, $^w\dot{P}$, $^w\ddot{P}$ are as follows:

$$^w\dot{P} = {}^wv = {}^wv_f + {}^w\omega_f \times {}^wP_f + {}^wv_w \qquad (7)$$

$$^w\ddot{P} = {}^w\dot{v} = {}^w\dot{v}_f + 2{}^w\omega_f \times {}^wv_f + {}^w\omega \times ({}^w\omega_f \times {}^wP_f)$$

$$+ {}^w\dot{\omega} \times {}^wP_f + {}^w\dot{v}_w \qquad (8)$$

$$^w\omega = {}^w\omega_w + {}^w\omega_f, \quad {}^w\dot{\omega} = {}^w\dot{\omega}_w + {}^w\dot{\omega}_f \qquad (9)$$

$^wv$ : hand velocity (six vectors) in wrist coordinates

$^w\dot{v}$ : hand acceleration (six vectors) in wrist coordinates

$^wv_f$ : velocity (six vectors) produced by the wrist joint in wrist coordinates

$^wv_\omega$ : wrist joint velocity (six vectors) in wrist coordinates

$^w\omega$ : hand angular velocity (six vectors) in wrist coordinates

$^w\dot{\omega}$ : hand angular acceleration (six vectors) in wrist coordinates

$^w\omega_f$ : angular velocity (six vectors) produced by the wrist joint in wrist coordinates

$^w\omega_w$ : wrist joint angular velocity (six vectors) in wrist coordinates

Step S5:

This $^wP_f$ cannot exceed the wrist joint range of movement (usually not so large). Therefore, the manipulator may move the wrist joint position $^oP$ over the wrist joint range of movement by controlling the wrist joint position $^wP_w$ so that $^wP_f$ may not go outside the wrist joint movable area. For this, the position control should be carried out by giving the objective value of the wrist joint position as shown in the following Equation.

$$^wP_{wr} = Filter\ ({}^wP_f) \qquad (10)$$

$^wP_{wr}$ :    objective values (six vectors) of the wrist joint position in wrist coordinates Manipulator moving function, that is, Filter ( ) will be detailed later.

Step S6:

The position control is carried out so as to make the present position $^wP_o$ of the manipulator coincident with the reference value $^wP_{wr}$ given in Step S5.

$^wP$ is obtained by adding the resultant present position $^wP_o$ determined by the position control and the $^wP_f$ determined in Step S4. $^wP$ is used for the calculation in Step S1.

The foregoing steps are repeatedly performed at a high frequency.

The filter function Filter( ) should be selected so as to move the hand position $^oP$ as widely as possible and operate the manipulator stably. Now, the stability of the one-dimensional model will be taken into account.

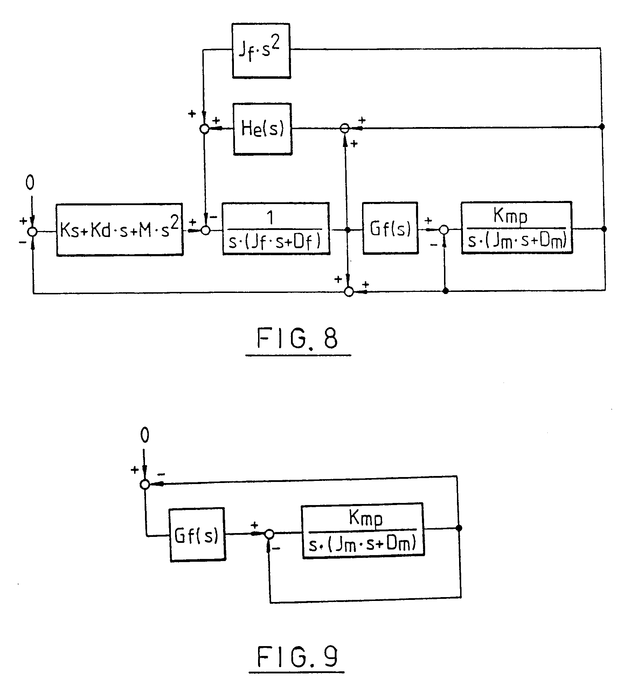

The foregoing control rules are shown by a block diagram in one dimension in Figure 8.

The meaning of the symbols in Figure 8 are as follows:

$K_s$ :    imaginary spring coefficient of the desirable compliance

$K_d$ :    imaginary attenuation coefficient of the desirable compliance

M :    imaginary inertia of the desirable compliance

$J_f$ :    wrist joint inertia

$D_f$ :    attenuation coefficient of the wrist joint

$K_{mp}$ :    position control gain of the manipulator

$J_m$ :    manipulator inertia

$D_m$ :    manipulator attenuation coefficient

$H_e(s)$:    transfer function of the external environment (object which the hand touches)

$Gf(s)$:    filter transfer function

S :    parameter

Generally, the control system becomes unstable with the increase of the feedback quantity. In the system of Figure 8, the feedback quantity increases with the gain of the external environment transfer function $H_e$-$(s)$. As a result, the case where this system stability is damaged worst is that where the hand touches a very hard object. This corresponds to the case where the gain of the external environment transfer function $H_e(s)$ is extremely large. When $|H_e(s)|$ is infinite, the block diagram of the system is shown by Figure 9.

In Figure 9, by setting $D_m = 2(J_m \cdot K_{mp})^{1/2}$ and $T = (J_m/K_{mp})^{1/2}$, one recurrence transfer function $G(s)$ is expressed by Equation (11).

$$G(s) = \frac{Gf(s)}{(1 + S \cdot T)^2} \tag{11}$$

In order to increase the range of movement of the hand position $^oP$, $|G(s)|$ should be larger. On the other hand, for system stability, it is required that $\angle G(s) = -180°$ and $|G(s)| \leqq 1$. Therefore, the filter transfer function $Gf(s)$ may be expressed by the following Equations taking the phase margin into account.

$$Gf(s) = K_p + K_i/s \tag{12}$$

$$Gf(s) = K_p/(1 + K_i) \tag{13}$$

$K_p$:    proportion gain

$K_i$:    integration gain

s :    Laplace operator

Although the case of (12) attains a larger range of motion at a high frequency than that of (13), the case of (13) has superior characteristics in other respects. These transfer functions should be appropriately determined according to the application.

Example of the transfer function:

when $T = 7.9 \times 10^{-3}$ [sec/rad]

$$Gf(s) = 3.66 + 231/s$$

In the arrangement described above, the hand compliance can be freely controlled by the cooperation between the manipulator and the wrist joint, and the following features can be obtained compared with the conventional method:

9

. There is no influence of the hardness of the external environment (object which the hand touches).
. The hand hardness can be varied from an extremely soft state to an extremely hard state.
. It can respond up to a high frequency even if the hand is in the soft state.
. A wide range of motion of the hand for executing the foregoing compliance control can be obtained.

**Claims**

1. A method of controlling a robot manipulator comprising an arm (12), a wrist joint (1,2,3,4,5), and a hand, said wrist joint being operable to move the hand relative to the arm and capable of generating an arbitrary force at said hand, whereby the hand is to be moved to an intended position, comprising the steps of:
   detecting at least the values of the position and the velocity of movement of said hand, computing a force to be generated by said hand, and utilising said wrist joint to generate said force, and characterised by the steps of:
   detecting the value of the current position of the arm;
   solving the equation of movement of said hand (11) and arm (12) on the basis of the detected values, in order to compute the force to be generated by said hand,
   determining the displacement ($^wp_f$) of the hand from a zero ($^wp_o$) position relative to the arm and calculating a reference position ($^wp_{wr}$) of said arm using the equation of motion for the manipulator by subjecting said hand displacement to a filter function of either $k_p + K_i/S$ or $K_p/(1 + K_i/S)$, where $K_p$ is a proportion gain, $K_i$ is an Integration gain and S is a Laplace operator;
   and controlling said arm so as to make the present position of the arm coincident with this arm reference position ($^wp_{wr}$) and controlling said hand so that the position of said hand coincides with the intended position of the hand, to thereby compensate for limitation in the range of movement of said wrist joint

2. A method as claimed in claim 1 wherein the hand position is determined by adding said displacement ($^wp_f$) of the hand from a zero ($^wp_o$) position relative to the arm and said arm position, and the hand velocity is determined by differentiating the determined hand position with time.

3. A robot manipulator comprising an arm (12), a wrist joint (1,2,3,4,5), and a hand, said wrist joint being operable to move the hand relative to the arm and capable of generating an arbitrary force at said hand, whereby the hand is to be moved to an intended position, said manipulator further comprising:
   means for detecting at least the values of the position and the velocity of movement of said hand, computing a force to he generated by said hand, and utilising said wrist joint to generate said force, and characterised by:
   means for detecting the value of the current position of the arm;
   means for solving the equation of movement of said hand (11) and arm (12) on the basis of the detected values, in order to compute the force to be generated by said hand,
   means for determining the displacement ($^wp_f$) of the hand from a zero ($^wp_o$) position relative to the arm and calculating a reference position ($^wp_{wr}$) of said arm using the equation of motion for the manipulator by subjecting said hand displacement to a filter function of either $k_p + K_i/S$ or $K_p/(1 + K_i/S)$, where $K_p$ is a proportion gain, $K_i$ is an integration gain and S is a Laplace operator;
   and means for controlling said arm position so as to make the present position of the arm coincident with this arm reference position ($^wp_{wr}$) and controlling said hand so that the position of said hand coincides with the intended position of the hand, to thereby compensate for limitations in the range of movement of said wrist joint.

**Patentansprüche**

1. Verfahren zum Steuern eines Robotermanipulators, der einen Arm (12), eine Handgelenkverbindung (1, 2, 3, 4, 5) und eine Hand umfaßt, wobei die Handgelenkverbindung betätigbar ist, um die Hand relativ zum Arm zu bewegen und in der Lage ist, eine beliebige Kraft an der Hand zu erzeugen, wodurch die Hand zu einer beabsichtigten Position bewegt werden kann, umfassend die Schritte des:
   Erfassens zumindest der Werte der Position und der Geschwindigkeit der Bewegung der Hand, Berechnens einer durch die Hand zu erzeugenden Kraft und Benutzens der Handgelenkverbindung, um die Kraft zu erzeugen, und gekennzeichnet durch die Schritte des:
   Erfassens des Wertes der augenblicklichen Position des Arms,

Lösens der Bewegungsgleichung der Hand (11) und des Armes (12) auf der Basis der erfaßten Werte, um die durch die Hand zu erzeugende Kraft zu berechnen,

Bestimmens der Verschiebung ($^w p_f$) der Hand von einer Nullposition ($^w p_o$) relativ zu dem Arm und Berechnens einer Bezugsposition ($^w p_{wr}$) des Armes unter Benutzung der Bewegungsgleichung für den Manipulator durch Unterwerfen der Handverschiebung einer Filterfunktion von entweder $k_p + K_i/S$ oder $K_p/(1 + K_i/S)$, in der $K_p$ ein Verhältnisfaktor ist, $K_i$ ein Integrationsfaktor und S ein Laplace-Operator ist, und des Steuerns des Armes so, daß die augenblickliche Position des Armes mit der Bezugsposition ($^w p_{wr}$) dieses Armes zusammenfällt, und des Steuerns der Hand so, daß die Position der Hand mit der beabsichtigten Position der Hand zusammenfällt, um dadurch die Beschränkung im Bewegungsbereich der Handgelenkverbindung auszugleichen.

2. Verfahren nach Anspruch 1, bei dem die Position der Hand bestimmt wird durch Hinzufügen der Verschiebung ($^w p_f$) der Hand von einer Nullposition ($^w p_o$) aus relativ zu dem Arm und der Armposition, und die Handgeschwindigkeit bestimmt wird durch Differentieren der bestimmten Handposition nach der Zeit.

3. Robotermanipulator umfassend einen Arm (12), eine Handgelenkverbindung (1, 2, 3, 4, 5) und eine Hand, wobei die Handgelenkverbindung betätigbar ist, um die Hand relativ zu dem Arm zu bewegen und in der Lage ist, eine beliebige Kraft an der Hand zu erzeugen, wodurch die Hand in eine beabsichtigte Position bewegt werden soll, und der Manipulator weiter umfaßt:

Mittel zum Erfassen zumindest der Werte der Position und der Bewegungsgeschwindigkeit der Hand, das Berechnen einer durch die Hand zu erzeugenden Kraft und das Benutzen der Handgelenkverbindung, um die Kraft zu erzeugen,

und gekennzeichnet durch:

Mittel zum Erfassen des Wertes der augenblicklichen Position des Armes,

Mittel zum Lösen der Bewegungsgleichung der Hand (11) und des Armes (12) auf der Basis der erfaßten Werte, um die durch die Hand zu erzeugende Kraft zu berechnen,

Mittel zum Bestimmen der Verschiebung ($^w p_f$) der Hand von einer Nullposition ($^w p_o$) aus relativ zu dem Arm und zum Berechnen einer Bezugsposition ($^w p_{wr}$) des Armes unter Benutzen der Bewegungsgleichung für den Manipulator durch Unterwerfen der Verschiebung der Hand einer Filterfunktion von entweder $k_p + K_i/S$ oder $K_p/(1 + K_i/S)$, in der $k_p$ ein Verhältnisfaktor ist, $K_i$ ein Integrationsfaktor und S ein Laplace-Operator ist,

und Mittel zum Steuern der Armposition so, daß die augenblickliche Position des Armes mit der Bezugsposition ($^w p_{wr}$) dieses Armes zusammenfällt, und zum Steuern der Hand so, daß die Position der Hand mit der beabsichtigten Position der Hand zusammenfällt, um dadurch die Beschränkungen im Bewegungsbereich des Handgelenkes auszugleichen.

**Revendications**

1. Procédé de commande d'un manipulateur de robot comprenant un bras (12), une articulation de poignet (1, 2, 3, 4, 5), et une main, ladite articulation de poignet pouvant être actionnée pour déplacer la main par rapport au bras et pouvant engendrer une force arbitraire de ladite main, de telle sorte que la main est destinée à être déplacée vers une position déterminée, comprenant les étapes suivantes:

détection d'au moins les valeurs de la position et de la vitesse du déplacement de la main, calcul d'une force à engendrer par ladite main, et utilisation de ladite articulation de poignet pour engendrer ladite force, et caractérisé par les étapes suivantes:

détection de la valeur de la position en cours du bras;

résolution de l'équation du déplacement de ladite main (11) et dudit bras (12) sur la base des valeurs détectées, afin de calculer la force à engendrer par ladite main,

détermination du déplacement ($^w p_f$) de la main à partir d'une position zéro ($^w p_o$) par rapport au bras et calcul d'une position de référence ($^w p_{wr}$) dudit bras en utilisant l'équation du déplacement pour le manipulateur en soumettant ledit déplacement de la main à une fonction de filtrage de $k_p + K_i/S$ ou $K_p/(1 + K_i/s)$, où $K_p$ est un gain proportionnel, $K_i$ est un gain d'intégration et S est un opérateur de Laplace;

et commande dudit bras de manière à faire coïncider la position actuelle du bras avec cette position de référence ($^w p_{wr}$) du bras et commande de ladite main de telle sorte que la position de ladite main coïncide avec la position déterminée de la main, afin de compenser la limite dans la plage de déplacement de ladite articulation de poignet.

2. Procédé selon la revendication 1 dans lequel la position de la main est déterminée en ajoutant ledit déplacement ($^w p_f$) de la main à partir d'une position zéro ($^w p_o$) par rapport au bras et ladite position du bras, et la vitesse de la main est déterminée en différentiant la position déterminée de la main par rapport au temps.

3. Manipulateur de robot comprenant un bras (12), une articulation de poignet (1, 2, 3, 4, 5), et une main, ladite articulation de poignet pouvant être actionnée pour déplacer la main par rapport au bras et pouvant engendrer une force arbitraire de ladite main, par laquelle la main est destinée à être déplacée dans une position déterminée, ledit manipulateur comprenant en outre:

des moyens pour détecter au moins les valeurs de la position et de la vitesse de déplacement de ladite main, calculer une force à engendrer par ladite main, et utiliser ladite articulation de poignet pour engendrer ladite force,

et caractérisé par:

des moyens pour détecter la valeur de la position en cours du bras;

des moyens pour résoudre l'équation de déplacement de ladite main (11) et dudit bras (12) sur la base des valeurs détectées, afin de calculer la force à engendrer par ladite main,

des moyens pour déterminer le déplacement ($^w p_f$) de la main à partir de la position zéro ($^w p_o$) par rapport au bras et calcul d'une position de référence ($^w p_{wr}$) dudit bras en utilisant l'équation de déplacement pour le manipulateur en soumettant ledit déplacement de la main à une fonction de filtrage de $k_p + K_i/S$ ou $K_p/(1 + K_i/S)$, où $K_p$ est un gain proportionnel, $K_i$ est un gain d'intégration et S est un opérateur de Laplace;

et des moyens pour commander ladite position du bras de manière à faire coïncider la position actuelle du bras avec cette position de référence ($^w p_{wr}$) du bras et commande de ladite main de telle sorte que la position de ladite main coïncide avec la position déterminée de la main, afin de compenser les limites dans la plage de déplacement de ladite articulation de poignet.

EXTERNAL FORCE, TORQUE

| S1 | | S2 | | S3 | | S4 | HAND DISPLACEMENT S5 | | S6 |

CALCULATION OF THE CONTROL FORCE AND CONTROL TORQUE → COORDINATES CONVERSION INTO ACTUATOR COORDINATES $\tau_d$ + − DYNAMICS OF WRIST BODY $q$ COORDINATES CONVERSION FROM THE ACTUATOR COORDINATES INTO WRIST COORDINATES wPf MANIPULATOR MOVING FUNCTION wPwr MANIPULATOR

FORCE, TORQUE

DISPLACEMENT

wP

+ + wPo

EP 0 382 517 B1

FIG. 1

FIG. 2

FIG. 3

14

FIG. 4

FIG. 5

FIG. 6

FIG. 7

FIG. 8

FIG. 9